# EUROPÄISCHE PATENTANMELDUNG

(11) **EP 1 941 996 A1**
(43) Veröffentlichungstag der Anmeldung: **09.07.2008**
(21) Anmeldenummer: 08100120.8
(22) Anmeldetag: 04.01.2008
(51) Int. Cl.: B32B 27/12, E06B 9/24

(54) **Textiler Folienverbund, insbesondere zur Abdeckung architektonischer Öffnungen, sowie Verfahren zu dessen Herstellung**

(30) Priorität: 04.01.2007 DE 102007001623
(71) Anmelder: Junkers & Müllers GmbH, 41239 Mönchengladbach (DE)
(72) Erfinder: Jakobs, Udo, 41849, Wassenberg (DE); Feicks, Thomas, 41179, Mönchengladbach (DE)
(74) Vertreter: Bonsmann, Joachim Bernhard

(57) **Zusammenfassung**

Die Erfindung betrifft einen textilen Folienverbund insbesondere zur Abdeckung architektonischer Öffnungen wie Fenster oder dergleichen, wobei der textile Folienverbund (1, 6) ein textiles Substrat (2) und einen Pigmentstoff (4) aufweist, wobei der Pigmentstoff (4) auf wenigstens eine an dem textilen Substrat (2) fixierte Folie (3) aufgebracht ist. Der Pigmentstoff kann selektiv reflektierend im IR-Bereich ausgebildet sein, so dass mit dem Flächenverbund Wärmestrahlung verstärkt reflektiert werden kann, wobei das zugrunde liegende textile Substrat gleichzeitig weitmaschig und daher teilweise durchscheinend ausgebildet werden kann.

## Beschreibung

Die vorliegende Erfindung betrifft ein Flächengebilde, insbesondere zur Abdeckung architektonischer Öffnungen, sowie ein Verfahren zu dessen Herstellung.

Bei dem Einsatz von Fenster- oder Türabdeckungen, wie z.B. von Jalousien, Rollos oder Vorhängen, sind in der Praxis häufig über einen gewissen Sichtschutz hinausgehende technische Effekte erwünscht, wobei insbesondere in der Regel das Aufheizen der jeweils begrenzten Innenräume durch einfallendes Sonnenlicht vermieden werden soll.

Grundsätzlich ist zum Zwecke der Erhöhung der Reflexion von die Aufheizung bewirkender Infrarotstrahlung die Verwendung von Pigmentstoffen bekannt, welche im Infrarotbereich ein erhöhtes Reflexionsvermögen und im sichtbaren Spektralbereich ein erhöhtes Transmissionsvermögen aufweisen. Bei der Verwendung derartiger Pigmentstoffe in Verbindung mit den zuvor erwähnten Fensterabdeckungen aus synthetischen Fasern wie z.B. Polyester tritt jedoch das Problem auf, dass das Aufbringen des Pigmentstoffes auf die Fasern nach Art einer Ausrüstung entweder nicht oder nur teilweise die im textilen Substrat vorhandenen Zwischenräume erfasst (so dass das Licht dort noch ungehindert durchfallen kann) oder, falls der Pigmentstoff unter vollständigem Verschließen der Zwischenräume aufgetragen wird, ein durchaus erwünschtes Durchscheinen nahezu vollständig unterbunden wird. Letztgenannter Effekt ist insofern nachteilig, als in der Regel eine gewisse Transparenz noch erwünscht ist, um einen Ausblick durch die Fensterabdeckung nach außen zu ermöglichen.

Vor dem obigen Hintergrund ist es eine Aufgabe der vorliegenden Erfindung, ein textiles Flächengebilde, insbesondere zur Abdeckung architektonischer Öffnungen wie Fenster oder dergleichen, bereitzustellen, welches die Erzielung bestimmter technischer Effekte wie z.B. Wärmestrahlungsreflexion bei wesentlich geringerer Beeinträchtigung der Transparenz bzw. der Durchscheinwirkung ermöglicht.

Diese Aufgabe wird gemäß den Merkmalen des unabhängigen Anspruchs 1 gelöst.

Dadurch, dass das Flächengebilde als textiler Folienverbund ausgebildet ist, bei dem erfindungsgemäß der Pigmentstoff auf wenigstens einer an dem textilen Substrat fixierten Folie vorgesehen ist, kann ohne die Gefahr des Zusetzens bzw. Verschließens von vorhandenen Öffnungen bzw. Zwischenräumen ein über die Oberfläche des textilen Flächengebildes gleichmäßiger Pigmentauftrag erzeugt werden, so dass auch die jeweils beabsichtigte technische oder auch ästhetische Wirkung (z.B. die Vermeidung des Aufheizens des Innenraumes durch einfallendes Sonnenlicht, Glanzeffekte) mit hoher Gleichmäßigkeit über die gesamte Ausdehnung der Abdeckung bereitgestellt werden kann. Infolge der unverschlossen bleibenden Zwischenräume ist die gewünschte Transparenz bzw. Durchscheinwirkung weiterhin gewährleistet.

Ein weiterer Vorteil der erfindungsgemäßen Anordnung besteht darin, dass der Pigmentstoff auf der Folie bereits vor der Fixierung an dem textilen Substrat aufgebracht werden kann, so dass das textile Substrat selbst für die Herstellung des gewünschten textilen Folienverbundes nur einem vergleichsweise kurzen Behandlungsprozess zu unterwerfen ist.

Die Erfindung ist nicht auf Pigmentstoffe zur Verringerung des Aufheizens durch einfallendes Sonnenlicht mittels verstärkter Infrarotreflexion beschränkt, sondern ganz allgemein in Verbindung mit beliebigen Pigmenten oder auch anderen Beschichtungsstoffen einsetzbar, beispielsweise Effektpigmenten, die einen Glanz-und/oder Farbeffekt erzeugen.

Des Weiteren ist die Erfindung nicht auf textile Substrate in Form von Geweben beschränkt, sondern ist in Verbindung mit beliebigen textilen Flächengebilden, wie beispielsweise Vliesstoffen, Gewirken oder Maschenwaren aus synthetischen oder auch aus pflanzlichen, tierischen oder mineralischen Faserstoffen einsetzbar. Die Erfindung ist ferner auch nicht auf textile Flächengebilde zum Zwecke der Fensterabdeckung (wie Jalousien, Vorhänge, Rollos, Lamellenvorhänge, Plisseestoffen etc.) beschränkt, sondern zur Abdeckung beliebiger architektonischer Öffnungen wie Türen oder zur Abdeckung von Glasflächen (z.B. von Wintergärten oder Gewächshäusern) geeignet.

Gemäß einer bevorzugten Ausführungsform ist der Pigmentstoff auf der dem textilen Substrat zugewandten Oberfläche der Folie vorgesehen. Dies ist insofern vorteilhaft, als der Pigmentstoff auf diese Weise über die Folie vor Umwelteinflüssen und Abrieb geschützt ist. Gemäß weiteren Ausgestaltungen kann der Pigmentstoff auch auf beiden Oberflächen der Folie oder auch nur auf der dem textilen Substrat abgewandten Oberfläche der Folie vorgesehen sein.

Gemäß einer bevorzugten Ausführungsform weist der Pigmentstoff für auftreffendes Licht mit einer Wellenlänge im Infrarotbereich ein vergleichsweise höheres Reflexionsvermögen auf als für Licht mit einer Wellenlänge im sichtbaren Wellenlängenbereich. Auf diese Weise kann die Verhinderung einer unerwünschten Aufheizwirkung besonders effizient mit der Aufrechterhaltung einer hinreichenden Transparenz kombiniert werden.

Alternativ oder zusätzlich kann der Pigmentstoff auch zur Erzielung besonderer ästhetischer Effekte wie z.B. Glanz- oder Glitzereffekte ausgebildet sein, wobei auch die genannten Pigmente sowie andere mögliche Pigmente miteinander vermischt werden können oder auf beiden Seiten der Folie unterschiedliche Pigmentzusammensetzungen verwendet werden können.

Gemäß einer bevorzugten Ausführungsform ist die Folie aus einem Kunststoffmaterial, vorzugsweise Polyethylenterephthalat (PET), hergestellt. Dies hat den Vorteil, dass eine ausreichende Transparenz und UV-Beständigkeit gegeben ist und eine gewisse Wärmeschutzwirkung auch schon durch die Folie selbst bereitgestellt bzw. verbessert wird, da diese bereits für sich genommen eine Reflexionswirkung aufweist, auch wenn diese Reflexionswirkung in der Regel nicht IRselektiv ist.

Die Dicke der erfindungsgemäß verwendeten Folie liegt typischerweise im Bereich von 9 bis 23 Mikrometern und beträgt vorzugsweise etwa 12 Mikrometer. Dies ist insofern vorteilhaft, als die Dicke zum einen für die Funktion als Trägerfolie ausreichend und zum anderen infolge der geringen Dicke noch keine negative Beeinflussung der Entflammbarkeit vorhanden ist.

Gemäß einer bevorzugten Ausführungsform ist das textile Substrat flammhemmend ausgebildet, was entweder vor dem Aufbringen der beschichteten Folie auf dem textilen Substrat durch Verwendung von Textilfasern mit eingearbeiteter Flammschutzausrüstung (z.B. Trevira CS ^{®}) oder durch chemische Appretur des Flächengebildes als auch in einem zusätzlichen Ausrüstungsschritt nach dem Aufbringen der beschichteten Folie auf dem textilen Folienverbund erreicht werden kann.

Gemäß einer bevorzugten Ausführungsform kann das textile Substrat bedruckt oder gefärbt ausgebildet sein, wobei diese Vorarbeiten bevorzugt vor dem Aufbringen der Folie durchgeführt werden.

Gemäß einer bevorzugten Ausführungsform ist das verwendete textile Substrat zu einem gewissen Grade durchscheinend ausgebildet, d.h. zwischen den einzelnen Faser- bzw. Fadenöffnungen des textilen Substrates verbleiben hinreichend große Zwischenräume.

Die entsprechenden Zwischenräume sind hinsichtlich ihrer Abmessungen bevorzugt größer - besonders bevorzugt wesentlich größer - als der mittlere Durchmesser der verwendeten Pigmentstoffe.

Gemäß einem weiteren Aspekt betrifft die Erfindung auch die Verwendung eines textilen Folienverbundes mit den vorstehend beschriebenen Eigenschaften zur wenigstens bereichsweisen Abdeckung architektonischer Öffnungen wie Fenster od. dgl.

Die Erfindung betrifft ferner ein Verfahren zur Herstellung eines textilen Folienverbundes, wobei der Pigmentstoff auf eine Folie aufgebracht wird, wobei diese Folie nach dem Aufbringen des Pigmentstoffes an dem textilen Substrat fixiert wird.

Weitere Ausgestaltungen der Erfindung sind der Beschreibung sowie den Unteransprüchen zu entnehmen.

Die Erfindung wird nachstehend anhand bevorzugter Ausführungsformen unter Bezugnahme auf die beigefügten Abbildungen näher erläutert.

Es zeigen:
- Figur 1 a-1 b: schematische Darstellungen bevorzugter Ausführungsformen eines erfindungsgemäßen textilen Folienverbundes in Querschnittsansicht;
- Figur 2: ein Flussdiagramm zur Erläuterung des erfindungsgemäßen Verfahrens zur Herstellung eines textilen Folienverbundes gemäß einer bevorzugten Ausführungsform; und
- Figur 3: ein Diagramm, in welchem der prozentuale Reflexionsgrad in Abhängigkeit von der Wellenlänge für einen erfindungsgemäßen textilen Folienverbund sowie für ein Vergleichsprodukt ohne erfindungsgemäße Folie aufgetragen ist.

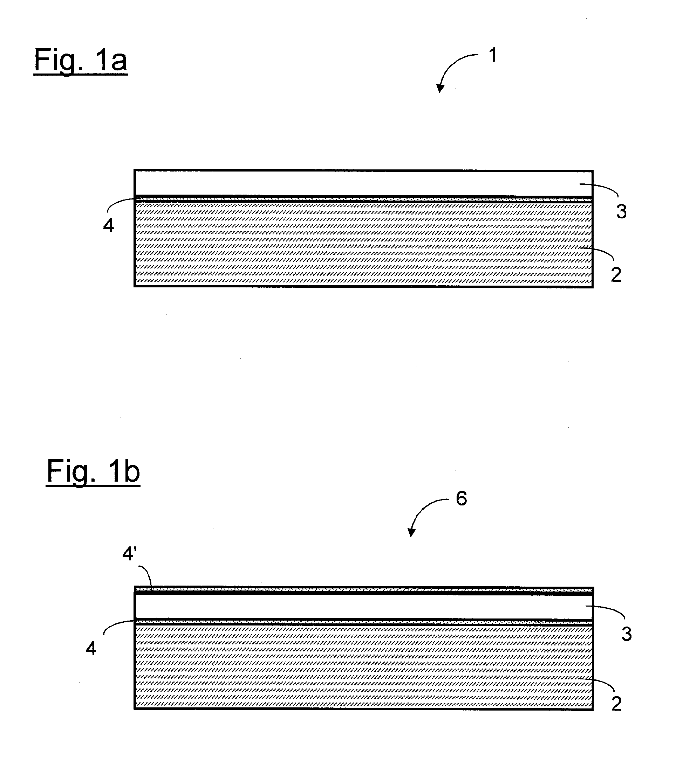

Gemäß Fig. 1a weist ein erfindungsgemäßer textiler Folienverbund 1 ein textiles Substrat 2, z.B. in Form eines Gewebes aus synthetischen Fasern mit eingearbeiteter Flammschutzausrüstung (z.B. Polyester Trevira CS ^{®})), eine auf dem textilen Substrat 2 aufgebrachte Folie 3 z.B. aus PET (Polyethylenterephthalat) sowie einen Pigmentstoff 4 auf, welcher gemäß Fig. 1a auf der dem textilen Substrat 2 zugewandten Seite der Folie 3 vorgesehen ist. Gemäß dem in Fig. 1b dargestellten alternativen Ausführungsbeispiel eines textilen Folienverbundes 6 kann ein weiterer (mit dem Pigmentstoff 4 identischer oder hiervon verschiedener) Pigmentstoff 4' auch auf der dem textilen Substrat 2 abgewandten Seite der Folie 3 aufgebracht sein. Des Weiteren kann in einer alternativen (nicht dargestellten) Ausführungsform ein entsprechender Pigmentstoff 4' auch nur auf der dem textilen Substrat abgewandten Seite der Folie aufgebracht sein.

Je nach Art der Fixierung der mit dem Pigmentstoff 4 versehenen Folie 3 an dem Textilprodukt 2 befindet sich zwischen der mit dem Pigmentstoff 4 versehenen Folie 3 und dem textilen Substrat 2 jeweils noch vollflächig oder bereichsweise eine zusätzliche Kleberschicht (nicht dargestellt), welche vorzugsweise aus Polyurethan, Polyacrylat oder Co-Polyester besteht.

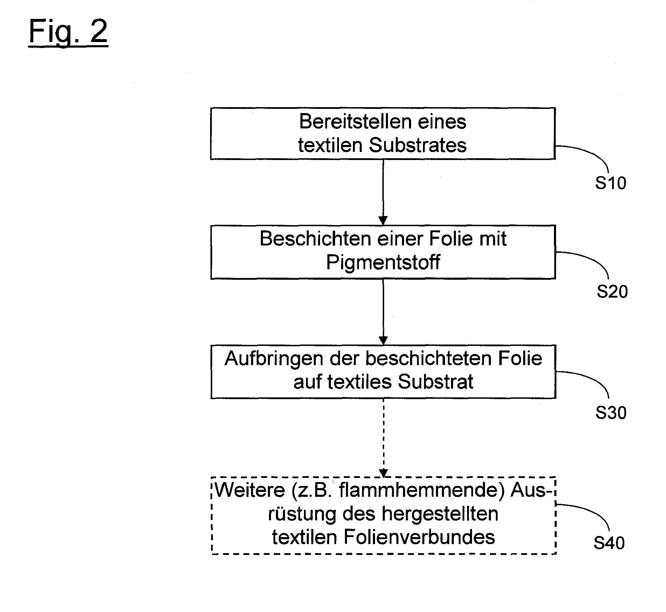

Zur Herstellung des erfindungsgemäßen textilen Folienverbundes 1 wird gemäß dem Flussdiagramm von Fig. 2, nach Bereitstellen eines geeigneten textilen Substrates in einem Schritt S10, zunächst die Folie 3 mit dem Pigmentstoff 4 in einem Schritt S20 beschichtet. Hierbei wird vorzugsweise zur Verbesserung der Haftwirkung des Pigmentstoffes 4 an der Folie 3 ein als solcher bekannter Haftvermittler - z.B. auf Acrylatbasis - verwendet. Bei dem Pigmentstoff kann es sich beispielsweise um einen kommerziell erhältlichen Pigmentstoff in Form eines Gemisches aus Glimmer bzw. Mica und Titandioxid (TiO₂) mit Siliziumdioxid (SiO₂), Zinnoxid (SnO₂) und/oder Zirkoniumoxid (ZrO₂) mit typischen Partikelgrößen im Bereich von 5 bis 60 Mikrometern handeln.

Die Menge an aufgebrachtem Pigmentstoff auf die Folie 3 liegt typischerweise zwischen 2 und 10 g/m² und beträgt vorzugsweise 3 - 5 g/m².

Anschließend erfolgt in einem Schritt S30 das Aufbringen der mit dem Pigmentstoff 4 beschichteten Folie 3 auf das textile Substrat 2. Dies erfolgt (ohne dass die Erfindung jedoch hierauf beschränkt wäre) im Ausführungsbeispiel mittels Aufbringung eines transparenten Klebers aus Polyurethan, Polyacrylat oder Co-Polyester mit hinreichender UV-Beständigkeit in Form kleiner Punkte auf das textile Substrat oder auf die mit dem Pigmentstoff 4 versehenen Fläche der Folie 3, unmittelbar bevor die Folie 3 mit dem textilen Substrat 2 in Kontakt gebracht wird. Alternativ kann ein solcher Kleber selbstverständlich auch anderweitig gemustert oder vollflächig aufgebracht werden.

In einer weiteren alternativen Ausführungsform kann der Haftvermittler bzw. Kleber, der die Haftung des Pigmentstoffes bewirken soll, gleichzeitig als Kleber für das Fixieren der Folie auf dem textilen Substrat benutzt werden. Hierzu muss ein geeigneter Kleber bzw. Haftvermittler verwendet werden. Dieser wird dann zunächst auf die Folie aufgebracht und die Pigmente auf der Klebeschicht verteilt. Vor dem Aushärten des Klebers wird dann die so beschichtete Folie auf das textile Substrat aufgebracht. Diese Vorgänge können unmittelbar hintereinander auf einer geeigneten Maschine durchgeführt werden.

In einem weiteren, optionalen Schritt S40 kann eine zusätzliche Ausrüstung des hergestellten textilen Folienverbundes 1, beispielsweise zur Erzielung einer flammhemmenden (schwer entflammbaren) Wirkung oder auch mittels Bedrucken, erfolgen. Des Weiteren kann eine solche Ausrüstung vorzugsweise auch vor dem Aufbringen der mit dem Pigmentstoff 4 beschichteten Folie 3 auf das textile Substrat 2 erfolgen.

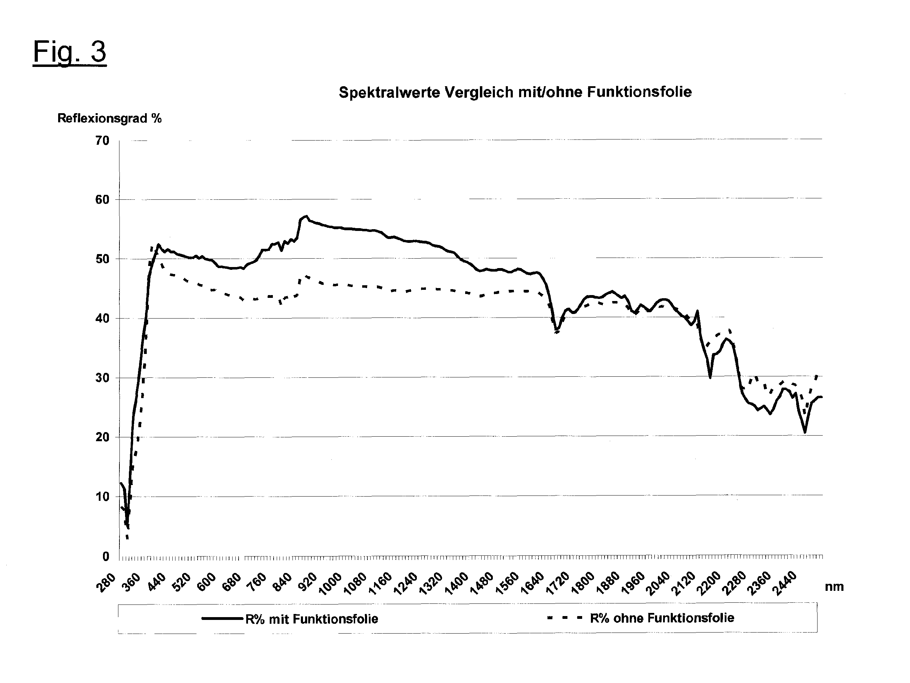

In dem Diagramm von Fig. 3 ist der wellenlängenabhängige, prozentuale Reflexionsgrad für einen erfindungsgemäßen textilen Folienverbund 1 (durchgezogene Kurve) im Vergleich zu einem entsprechenden textilen Vergleichs-Flächengebilde, ohne Pigmentstoff und Folie (gestrichelte Kurve), dargestellt. Es ist erkennbar, dass für den erfindungsgemäßen textilen Folienverbund der prozentuale Reflexionsgrad vor allem im nahen Infrarotbereich (insbesondere bei Wellenlängen von mehr als 780 nm bis ca. 1700 nm) um absolut bis zu etwa 10 % erhöht wird.

Die Zusammensetzung des erfindungsgemäßen textilen Folienverbundes 1 war in einem konkreten Ausführungsbeispiel wie folgt: Das getestete textile Substrat bestand aus einem Gewebe aus 100 % Polyester Trevira CS ^{®} und hatte ein Flächengewicht von ca. 95 g/m² und eine Dicke von ca. 0,19 mm. Die Folie bestand aus Polyethylenterephthalat (PET) und hatte eine Dicke von 12 Mikrometer. Der Pigmentstoff hatte eine Zusammensetzung von 48-60 % Glimmer/Mica und SiO₂, 40 - 50 % TiO₂ (Rutil), 0-2 % SnO₂ bei einer mittleren Partikelgröße von 5 - 60 Mikrometer. Die Fixierung der mit dem Pigmentstoff versehenen Folie an dem textilen Substrat erfolgte mittels punktweiser Aufbringung eines transparenten Klebers aus Polyurethan auf das textile Substrat, unmittelbar bevor die mit Pigmentstoff beschichtete Folie punktförmig mit dem textilen Substrat verklebt wurde.

Die Zusammensetzung des textilen Vergleichs-Flächengebildes gemäß Fig. 3 war wie folgt: Das textile Substrat bestand aus einem Gewebe aus 100 % Polyester Trevira CS ^{®} und hatte ein Flächengewicht von ca. 95 g/m² und eine Dicke von ca. 0,19 mm und war mit einer griffgebenden Appretur aus Polyurethan versehen.

Neben der vorstehend erwähnten Wärmeschutzwirkung gegenüber einfallender Strahlung "von Außen" ist bei dem erfindungsgemäßen Flächengebilde weiterhin vorteilhaft, dass durch die Reflexionswirkung des Pigmentstoffes und der Folien auch eine Reflexion der vom Innenraum durch das Flächengebilde durchscheinenden Strahlung gegeben ist, so dass das erfindungsgemäße Flächengebilde auch eine Energieersparnis durch Rückreflexion der aus dem Raum austretenden Strahlung bewirkt, wobei diese Rückreflexionswirkung bei entsprechender Ausgestaltung des Pigmentstoffes insbesondere für den Infrarotbereich besonders wirksam ist. Auf diese Weise können Heizenergieersparnisse trotz eines gewünschten durchscheinenden Charakters des Flächengebildes erzielt werden.

## Patentansprüche

1. Flächengebilde, insbesondere zur Abdeckung architektonischer Öffnungen wie Fenstern oder dergleichen, wobei das Flächengebilde ein textiles Substrat und einen Pigmentstoff aufweist,
**dadurch gekennzeichnet, dass**
das Flächengebilde als textiler Folienverbund ausgebildet ist, bei dem der Pigmentstoff (4) auf wenigstens einer an dem textilen Substrat (2) fixierten Folie (3) vorgesehen ist.

2. Flächengebilde nach Anspruch 1,
**dadurch gekennzeichnet, dass**
der Pigmentstoff (4) auf der dem textilen Substrat (2) zugewandten Oberfläche der Folie (3) vorgesehen ist und die Folie (3) vorzugsweise mit dem Pigmentstoff (4) beschichtet ist.

3. Flächengebilde nach Anspruch 1,
**dadurch gekennzeichnet, dass**
der Pigmentstoff auf der dem textilen Substrat (2) abgewandten Oberfläche der Folie (3) oder auf beiden Seiten (4, 4') der Folie vorgesehen ist.

4. Flächengebilde nach einem der Ansprüche 1 bis 3,
**dadurch gekennzeichnet, dass**
der Pigmentstoff (4) für auftreffendes Licht reflektierende Eigenschaften aufweist.

5. Flächengebilde nach Anspruch 4,
**dadurch gekennzeichnet, dass**
der Pigmentstoff (4) für auftreffendes Licht mit einer Wellenlänge im Infrarot-Bereich ein höheres Reflexionsvermögen aufweist als für Licht mit einer Wellenlänge im sichtbaren Wellenlängenbereich,
und/oder
dass der Pigmentstoff (4) ein Effektpigment mit einem Glanz- und/oder Farbeffekt enthält oder vollständig aus einem derartigen Effektpigment besteht,
und/oder
dass der Pigmentstoff (4) Sonnenschutzeigenschaften aufweist.

6. Flächengebilde nach einem der vorhergehenden Ansprüche,
**dadurch gekennzeichnet, dass**
die Folie (3) aus einem Kunststoffmaterial, vorzugsweise Polyethylenterephthalat, hergestellt ist,
und/oder
dass die Folie (3) eine mittlere Dicke im Bereich von 9 bis 100, vorzugsweise von 9 bis 23 Mikrometern, besonders bevorzugt von 12 Mikrometern, aufweist.

7. Flächengebilde nach einem der vorhergehenden Ansprüche,
**dadurch gekennzeichnet, dass**
das textile Substrat (2) flammhemmend ausgebildet und/oder anderweitig, insbesondere griffgebend, ausgerüstet ist,
und/oder
dass das textile Substrat (2) gefärbt und/oder bedruckt ist,
und/oder
dass das textile Substrat (2) ein vorzugsweise aus synthetischen Fasern hergestelltes textiles Flächengebilde ist, das vorzugsweise als Gewebe ausgebildet ist.

8. Verwendung eines Flächengebildes nach einem der vorhergehenden Ansprüche zur wenigstens bereichsweisen Abdeckung architektonischer Öffnungen wie Fenster oder dergleichen.

9. Verfahren zur Herstellung eines als textiler Folienverbund ausgebildeten Flächengebildes, insbesondere zur Abdeckung architektonischer Öffnungen wie Fenster oder dergleichen, wobei ein textiles Substrat (2) mit einem Pigmentstoff versehen wird,
**dadurch gekennzeichnet, dass**
der Pigmentstoff (4) auf eine Folie (3) aufgebracht wird, wobei diese Folie (3) vor oder nach dem Aufbringen des Pigmentstoffes (4) an dem textilen Substrat (2) fixiert wird.

10. Verfahren nach Anspruch 9,
**dadurch gekennzeichnet, dass**
das Fixieren der Folie (3) an dem textilen Substrat (2) in einem Klebeprozess mittels eines transparenten Klebers, welcher vorzugsweise Polyurethan, Polyacrylat oder Co-Polyester aufweist, erfolgt,
oder
dass das Fixieren der Folie (3) an dem textilen Substrat (2) mittels eines Laminierprozesses erfolgt.

11. Verfahren nach Anspruch 10,
**dadurch gekennzeichnet, dass**
als Folie (3) eine vorzugsweise koextrudierte Folie mit wenigstens einer Schicht mit einer im Vergleich zu einem übrigen Teil der Folie (3) niedrigeren Schmelztemperatur verwendet wird,
und/oder
dass als Folie (3) eine Folie mit wenigstens einer thermoplastischen Schicht beschichtet oder lackiert verwendet wird, die im Vergleich zu einem übrigen Teil der Folie (3) eine niedrigere Schmelztemperatur aufweist.

12. Verfahren nach einem der Ansprüche 9 bis 11,
**dadurch gekennzeichnet, dass**
das Aufbringen des Pigmentstoffes (4) auf die Folie (3) unter Verwendung eines Haftvermittlers, vorzugsweise auf Acrylatbasis, erfolgt,
und/oder
dass beim Beschichten der Folie (3) mit Pigmentstoff (4) ein Haftvermittler verwendet wird, der anschließend zum Verkleben der Folie mit dem textilen Substrat (2) verwendet wird oder hierzu beiträgt.
